# EUROPEAN PATENT SPECIFICATION

(11) **EP 0 429 221 B1**
(45) Date of publication and mention of the grant of the patent: **26.07.1995**
(21) Application number: 90312209.1
(22) Date of filing: 08.11.1990
(51) Int. Cl.: G11B 11/10, G11B 19/02, G11B 27/36

(54) **A magnetooptic recorder-player**
Ein magnetooptisches Aufzeichnungs- oder Wiedergabegerät
Un appareil enregistreur ou lecteur magnéto-optique

(30) Priority: 20.11.1989 US 438902
(43) Date of publication of application: 29.05.1991
(73) Proprietor: International Business Machines Corporation, Armonk, N.Y. 10504 (US)
(72) Inventor: Tayefeh, Morovat, Tucson, Arizona 85749 (US)
(74) Representative: Burt, Roger James, Dr.

(56) References cited:
- EP-A- 0 273 421
- EP-A- 0 294 489
- EP-A- 0 309 232
- US-A- 4 879 703
- PATENT ABSTRACTS OF JAPAN vol. 11, no. 137 (P-572)(2584) 2 May 1987 & JP-A-61 276 149
- PATENT ABSTRACTS OF JAPAN vol. 12, no. 422 (P-783)(3269) 9 November 1988 & JP-A-63 157 340

## Description

The present invention relates to a magnetooptic recorder-player in which a laser means emits a laser beam to a storage member.

To date magnetooptic media has been notorious for surface or other media defects. The problem is sufficiently severe that every storage member employing magnetooptic recording should be surface analyzed for defects before data is actually recorded. Such surface analysis involved placing each storage member, such as a rotatable disk, into a recorder. The media is then written and read for defects to identify the aerial location of the defects, and then the media is erased. Finally, those tracks with defects are marked for location of the defects as is known. It is desired to reduce the number of disk rotations or storage member movements in achieving the surface analysis, i.e. combining the read and the erasing.

It also has been the practice in magnetooptic recorders to take three rotations for updating data in place. The first rotation is to read the data and store it in an external memory. The second rotation is to erase the area to be rerecorded and the third rotation is to record the data. It is desired to reduce the number of rotations necessary for recording and for enabling update in place.

Yoshida, et al. in US-A-4,566,088 shows a two beam magnetooptic recorder in which the beams have different wavelengths such that a first light spot reads the information and the second light spot erases the recorded information. It is also possible, according to this teaching, to combine the two functions such that the combination of the first and second separate beams with different wavelengths can be used to erase the medium. That is, the first beam which is a read beam, partially heats the magnetooptic storage member in a localized area. The second beam continues the heating such that it exceeds the Curie temperature which demagnetizes the localized area. The second beam then effectively erases it through the use and in combination with the magnetic bias field, which biases the residual magnetization to an erasure direction. It is desired to avoid the use of multiple beams in providing a read and erase or rewrite function.

Kryder, et al. in US-A-4,679,180 shows two widely spaced laser beams incident upon a rotating disk. A first beam reads out the data and if the data is the same as what is to be recorded, no change is made to the magnetooptic media in that localized area. If there is a change , then the area is rerecorded by a writing laser. It is desired to avoid this complex arrangement with a simpler apparatus which also reduces cost.

US-A-4,879,703 reflecting the subject matter of the preamble of the independent claims discloses a magnetooptic recorder player which uses a light quantity signal reflected from a recording medium during an erasing operation to detect defects in the recording medium. Recording of new information can then take place in non-defective portions without the requirement for a subsequent RAW step. The light quantity signal does not contain any indication of the information actually stored on the recording medium, but is instead a signal indicating the actual state of the recording medium itself; a defective portion in the medium has an abnormal reflectivity.

The present invention provides a magnetooptic recorder-player adapted to read, erase and record information to and from a magnetooptic storage member, and comprising: a laser means for emitting a single laser beam to the storage member to irradiate a portion of the storage member; control means for relatively moving the storage member and the laser beam such that the laser beam scans a predetermined trace on the storage member; readback means operable in a reading mode to intercept and demodulate a reflected beam from the storage member to obtain an indication of the information stored on the storage member; activation means for activating the laser means to supply a beam intensity sufficient to locally heat the irradiated portion to a temperature above the Curie point to facilitate erasing from or recording to the storage member; a bias means for directing the residual magnetization in the irradiated portion to a first of two possible residual directions upon cooling below the Curie temperature; the recorder-player being characterised in that: the control means and activation means are adapted to maintain the laser intensity and the relative speed of the storage member and laser beam such that a predetermined leading portion of the irradiated portion is below the Curie temperature such that the reflected beam from that portion is modulated to indicate the initial residual magnetization of that portion; the readback means being employed to demodulate the reflected beam from the leading portion in order to sense the residual magnetization of the leading portion as the beam scans the storage member, thereby giving an indication of the prior information stored in the predetermined trace.

In accordance with the present invention, a magnetooptic storage member and a laser beam are relatively moved at a predetermined relative speed. The intensity of the laser beam is such that a localized area of the storage member will be heated above the Curie temperature for enabling erasure or recording of information. The relationship of the laser beam intensity and a relative speed is such that an initial or leading portion of the impingement of the laser beam onto the localized area remains below the Curie temperature as the beam sweeps the storage member. This initial portion reflects light which can be read for ascertaining the recorded information existing in the area being scanned before the laser beam is applied for erasure, recording other information, or merely changing the direction of residual magnetization. The reflected light is also useful for detecting defects in the localized area as the laser beam scans the storage member.

The foregoing and other objects, features and advantages of the invention will be apparent from the following more particular description of preferred embodiments of the invention, as illustrated in the accompanying drawings.

Figure 1 illustrates operation of the invention on a single storage track of a magnetooptic storage member.

Figure 2 is a graph illustrating the relationship between magnetization and temperature of a typical magnetooptic storage member.

Figure 3 is a simplified diagram showing operation of the invention in a magnetooptic recorder-player.

Referring now more particularly to the drawing, like numbers indicate like parts and structural features in the various figures. A storage track 10 on storage member or rotatable magnetooptic disk 25, is scanned by a stationary erase beam 11 by the relative movement of track 10 in the direction of the arrow 12. The cross sectional shape of stationary erase beam 11 can be any desired shape, including circular, ovate and the like, as is known in the art. Laser beam 11 heats the magnetooptic storage layer (not shown) of storage member 25 of which track 10 is a portion. Such heating has a finite delay based upon the characteristics of the various magnetooptic media as well as the relative speed between each magnetooptic medium and its associated erase beam. Until the storage layer is heated to the Curie temperature at which time magnetization of the localized area under the beam 11 is destroyed, i.e. becomes non-magnetic, that portion of the track 10 being scanned by the erase beam will still reflect light which can be sensed for reading the informational signals recorded before beam 11 scans the track 10. As an example, when the relative speed between track 10 and erase beam 11 is relatively slow, then the thermal gradient is relatively sharp as indicated by the hatched area 13. This portion of the localized area being illuminated by erase beam 11 has not yet reached the Curie temperature and therefore remains as a magnetized area yet to be erased and therefore reflects light indicative of the stored information; i.e. the residual magnetization in track 10 and area 13 modulates the erase beam 11, in the same manner that a read beam is modulated by such residual magnetization, enabling the readback of information recorded just before it is being erased. Such detection is also useful for detecting defects in the storage medium, since when a defect is occurring, the reflected light from area 13 is greatly reduced in intensity therefore indicating the defect. Such defects then can be marked for avoidance in later recording or, if sufficiently large, an entire sector or addressable storage area of a storage medium 25 can be marked as being unsuitable for recording. As the relative speed between track 10 and erase beam 11 increases, the aerial portion in the localized area illuminated by erase beam 11 increases. For example, dash line 14 indicates an increased area resulting from an increased relative speed between track 10 and beam 11, while dash line 15 indicates a much greater area because of greatly increased relative speed. Such changes in relative speed can be caused by differences in radii of the tracks located on a rotatable magnetooptic storage member 25.

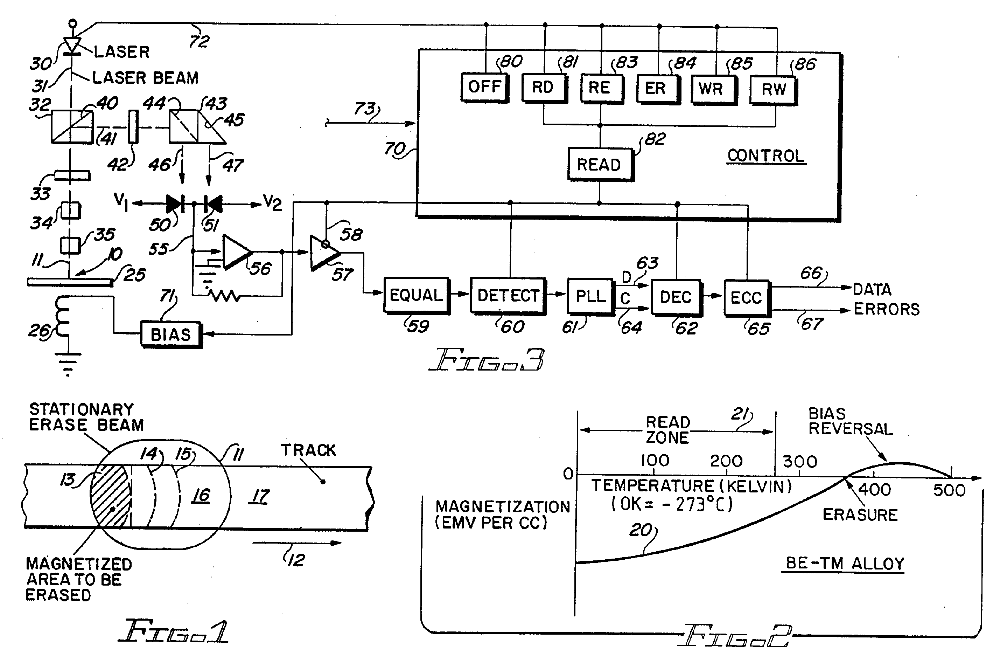

As seen in Figure 1, the area 16 which is a trailing portion of the localized area illuminated by erase beam 11 is completely unmagnetized, i.e. ready for erasure. The area 17 of track 10, which erase beam 11 has already passed over, has been erased by a directing magnetic field provided by bias coil 26. In this regard for magnetooptic media, a first direction of residual magnetization is defined as an erasure or erased direction, such as a south pole being located at the upper or facing surface of track 10 as it faces the beam 11. The second or opposite direction of residual magnetization defines information bearing signals, i.e. binary one's and so forth in various known recording formats. In this case, the south pole would be located at a surface of track 10 which faces away from beam 11. For recording information, the directing magnetic field provided by bias coil 26 is reversed for recording information bearing signals rather than recording an erasure direction.

In tests conducted employing a circular erase beam, successful readback of prerecorded information such as provided by light modulation caused by reflection of the light in area 13, was effected from about one-fourth of the area of the total erasure beam illuminating a storage track. Based upon a relative speed between the erase beam and track 10 of 16 meters per second with a 12 milliwatt erase power light intensity at the recording surface of track 10 with a data rate from 2-3 megabytes per second with a recording density in pulse width modulation (PWM) of 11.81 - 14.96 kilobytes per cm (30-38 kilobytes per inch), the modulated light intensity was equal to a readback by a read beam of the same area as the erase beam, but at 3 milliwatts. The reflected light intensity as modulated by the magnetized area to be erased 13 is a strong function of a relative speed of the storage medium and the erase beam (since this affects the size of the area 13 and the light intensity of the erase beam 11 at the recording surface of the storage medium). As relative speed between the storage medium and erase beam decreases, the erasing process causes the illuminated area of the erase beam to heat faster, thereby reducing the size of a magnetized area to be erased, that is illuminated by the erase beam. Such heating reduces the Kerr effect used in connection with modulating a light beam for sensing the information recorded on the track 10 and for indicating the direction of residual magnetization of the track 10 prior to encounter with erase beam 11.

Another test on yet another type of magnetooptic storage medium, in which the erase beam 11 had a light intensity power at the recording surface of the storage medium of 8 milliwatts with a relative speed between the storage medium and the erase beam of 5 meters per second with a data transfer rate of 500 kilobytes per second, resulted in 6-9 decibel reduction of signal amplitude with respect to a 3 milliwatt light intensity power read beam. Readback of prerecorded information was effected from approximately half of the area of the total erasure beam.

Figure 2 illustrates residual magnetization variation with the temperature of the magnetooptic recording materials. Curve 20 indicates a slight reduction at minor elevated temperatures up to about -123°C (150 Kelvin), with a steady degradation of magnetization, hence a reduction of Kerr effect, above 123°C (150 Kelvin). A read zone 21 is envisioned for the characteristics set forth in Figure 2. Perfect erasure occurs at the zero crossing point of curve 20, i.e. complete demagnetization. The effect of the bias reversal is shown as occurring between about 77°C (350 Kelvin) and 227°C (500 Kelvin). Various magnetooptic media will have similar curves but the quantities may differ. Since the erase beam has a higher beam intensity than a normal read beam then, depending upon the sensitivity of the readback system employed for reading the previously recorded information, readback from the smaller portion of the erase beam at the higher intensity is just as reliable as a normal read beam.

Figure 3 is an abbreviated drawing of a magnetooptic recorder-player with which the present invention is advantageously employed, in which only the readback while erase portion of the recorder-player is illustrated; it being understood that in a practical embodiment recording circuits are provided and separate readback circuits are provided which do not cause a reversal of the magnetization, i.e. read without erase. A semiconductor laser 30 is suitably powered for emitting a light beam 31 through a polarization beam splitter 32, thence quarter wave plate 33, a beam shaper or mirror 34 and objective lens 35 onto a track 10 of rotating storage member 25. In the read while erase function described in accordance with the present invention, laser beam 31 is at a power level suitable for erasing the data recorded as residual magnetization changes on track 10. Bias coil 26 has selective direction of electrical currents flowing therethrough for providing either an erasure or recording steering magnetic field in the area heated by laser beam 11.

Light reflected from track 10, such as in the magnetized area to be erased or in a read mode where an erasure does not occur, retraces the path of beam 11 through objective lens 35, mirror or beam shaper 34, quarter wave plate 33 and is reflected by the junction 40 of polarization beam splitter 32. The reflected beam turns to follow light path 41 through one-half wave plate 42, thence to a second beam splitter 43. Beam splitter 43 divides the beam on path 41 into two separate beams 46 and 47, respectively, by the half mirror 44 which is a junction of polarization beam splitter 43 and by the first surface exterior plain reflecting mirror 45. The two beams 46 and 47 are compared by the photo diodes 50 and 51, which are electrically powered and reverse biased as shown. The different signal which is caused by the well known Kerr effect is supplied over line 55 through a preamplifier 56. A voltage gain amplifier 57 is controlled by a signal received over line 58. The arrangement is such that the voltage gain of amplifier 57 can be such that the readback portion is degated such as during recording, or can have high gain, such as during read while erase, and during readback without erase. The output of gain amplifier 57 passes through the usual equalizer and filter (EQUAL) 59 and then is detected in detector 60. The output of detector 60 goes to a phase lock loop PLL 61 which separates a clock in the data signal from the detected signal. The clock signal is supplied over line 64, while the data signals slide over line 63 to a decoder 62, which decodes the data signal in accordance with the generated clock signal, as is known. The data output then is supplied to error detection and correction circuits ECC 65 which in turn output the corrected data signal 66 or provide for indication of uncorrectable errors supplied over line 67. The readback circuits are controlled by control 70, which may include a microprocessor, to be turned on only during readback operations. Additionally, control 70 provides a signal over line 72 to energize laser 30 to either a read intensity, a modulated write intensity, or an erasure intensity, all of which is well known and understood. Further, the direction of magnetic reversal is also under control 70 activating bias control 71 to control the direction of current flowing through coils 26.

In the prior art, during recording, bias circuit 71 activates coil 26 to provide a directing magnetic field to the localized heated area under beam 11 for causing a residual magnetization in the second residual direction. For erasure, the direction of the current is reversed in coil 26 for causing a directing magnetic field to effect residual magnetizations in track 10 in the first residual magnetic direction. During the read operation the bias circuit 71 is disabled.

The read recorded-data, while erasing such recorded data function, is also useful in doing surface analysis on a storage member 25. In the prior art, a read signal was supplied through laser 30 for detecting defects, i.e. amplitude modulation of the reflected light would indicate defects. In this regard, it should be noted that the entire storage member 25 would have to be recorded before such a technique would be used. After such readback, the entire disk should be erased again with the defective sectors being marked, as is known. By using the present invention, after recording a disk, the stationary erase beam 11 causing a magnetized area to be erased, results in reading back the recorded test patterns on the disk as well as simultaneously erasing the recorded test patterns. The notation and indication of defective areas is beyond the present description but is well known in the art.

The use of a read-erase beam 11 is also useful for all data security purposes. The usual read of information from a magnetooptic disk leaves all of the recorded information. By the use of a read-erase beam 11, the recorded information can be read out and simultaneously erased for protecting the security of such information. Accordingly, it is desired to provide control 70 such that a read intensity be provided by laser 30, as is known in the art, and can be controlled by a single line 72. Secondly, the read-erase beam 11 is also desired to be provided in the same recorder-player for providing that security erase in addition to the enhanced surface analysis. Of course, the usual recording circuits will also be provided.

Another variation of the present invention is that the erase beam can be turned into a recording beam wherein the minimum amplitude of the recording beam is the erasure amplitude and the bias current in coil 26 is selectively reversed for alternating between erased directions and recorded directions, i.e. first and second directions of residual magnetization.

Control 70 receives input control from the usual host processor or controller card (not shown) over a cable diagrammatically represented by numeral 73. Control 70 performs many functions not necessary to the understanding of the present invention. Those functions of course are eliminated. The laser control includes a plurality of states of operation. In one state 80 the laser is turned to an off condition, such as a level below the readback level. Alternately, the off state may provide a laser 30 output level equal to the read level. In the read state 81, not only is laser 30 activated by a signal on line 72 to emit a readback while not erase level of light intensity, the read activating circuit 82 is actuated to activate amplifier 57, detector 60, decoder 62 and ECC circuit 65 into a read mode. The operation of these devices in the read mode is well understood and not explained further for that reason. The read-erase state RE 83 provides the erase beam 11, described earlier with respect to Figure 1. This read-erase state provides activation of laser 30 to provide the erase beam 11 and simultaneously actuate a read control 82 for activating the readback circuits above described with numerals 57-65. RE state 83 is used both in the usual read and the security read above described. A simple erase state 84 provides for erasure ER without readback. In this state a read control 82 is not activated. In write state 85, the laser 30 is activated to provide a recording beam which either can be modulated to light intensity above and below a threshold which causes a thermal increase to the Curie temperature or to a heating below the Curie temperature resulting in no changes. The latter state, provided for maintaining a previously erased state by the low intensity laser beam, will cause reversal of the direction of residual magnetization by an appropriate bias through coil 26 without changing the coil current, i.e. during the recording operation a constant current is flowing through coil 26, while the modulation of the residual magnetization on storage member 25 is caused by the modulation of the light intensity from laser 30. The read before write state (RW) 86 causes a constant energy light beam to be emitted by laser 30, which is preferably a higher intensity beam than the erase beam 11. Modulation of the residual magnetization is caused by modulating the bias current to coil 26 through selective reversals in accordance with the information to be recorded.

## Claims

1. A magnetooptic recorder-player adapted to read, erase and record information to and from a magnetooptic storage member (25), and comprising:
a laser means (30) for emitting a single laser beam (31) to the storage member to irradiate a portion (11) of the storage member (25);
control means for relatively moving the storage member (25) and the laser beam (31) such that the laser beam scans a predetermined trace on the storage member;
readback means (82, 57, 60, 62, 65) operable in a reading mode to intercept and demodulate a reflected beam from the storage member (25) to obtain an indication of the information stored on the storage member;
activation means for activating the laser means to supply a beam intensity sufficient to locally heat the irradiated portion (11) to a temperature above the Curie point to facilitate erasing from or recording to the storage member (25);
a bias means (26, 71) for directing the residual magnetization in the irradiated portion to a first of two possible residual directions upon cooling below the Curie temperature;
the recorder-player being characterised in that:
the control means and activation means (83,86) are adapted to maintain the laser intensity and the relative speed of the storage member (25) and laser beam (31) such that a predetermined leading portion (13) of the irradiated portion (11) is below the Curie temperature such that the reflected beam from that portion is modulated to indicate the initial residual magnetization of that portion;
the readback means (82, 57, 60, 62, 65) being employed to demodulate the reflected beam from the leading portion in order to sense the residual magnetization of the leading portion (13) as the beam scans the storage member (25), thereby giving an indication of the prior information stored in the predetermined trace.

2. A recorder-player as claimed in claim 1, wherein said first direction is designated as an erasure direction of residual magnetization and said second direction as an information bearing direction of residual magnetization, such that the prior information is read out before the irradiated portion (11) is erased to the erasure direction.

3. A recorder-player as claimed in claim 1, wherein said first direction is designated as a direction of residual magnetization for carrying information and said second direction of residual magnetization as an erasure direction, such that the prior information is read before rewriting the irradiated portion (11).

4. A recorder-player as claimed in claim 3, wherein the bias is selectively reversed for recording information on the predetermined trace interspersed with erasure portions while reading the prior information during the recording.

5. A recorder-player as claimed in any preceding claim, wherein said activation means activates the laser means to emit a laser beam having an intensity less than that required to heat the irradiated portion of the storage member to the Curie temperature and is connected to the readback means (82, 57, 60, 62, 65) for activating the readback means to sense reflected light from the storage member for reading the prior recorded information without altering the prior recorded information.

6. A method of operating a magnetooptic recorder-player to read, erase and record information to and from a magnetooptic storage member (25), the method comprising the steps of:
employing a laser means (30) to emit a single laser beam (31) to the storage member to irradiate a portion (11) of the storage member (25);
relatively moving the storage member (25) and the laser beam (31) such that the laser beam scans a predetermined trace on the storage member;
operating a readback means (82, 57, 60, 62, 65) in a reading mode to intercept and demodulate a reflected beam from the storage member (25) to obtain an indication of the information stored on the storage member;
activating the laser means to supply a beam intensity sufficient to locally heat the irradiated portion (11) to a temperature above the Curie point to facilitate erasing from or recording to the storage member (25);
employing a bias means (26, 71) to direct the residual magnetization in the irradiated portion to a first of two possible residual directions upon cooling below the Curie temperature;
the method being characterised by the steps of:
controlling the intensity of the beam from the laser means (30) and the relative speed of the storage member (25) with respect to the laser beam (31) such that a predetermined leading portion (13) of the irradiated portion (11) is below the Curie temperature such that the reflected beam from that portion is modulated to indicate the initial residual magnetization of that portion; and
employing the readback means (82, 57, 60, 62, 65) to demodulate the reflected beam from the leading portion in order to sense the residual magnetization of the leading portion (13) as the beam scans the storage member (25), thereby giving an indication of the prior information stored in the predetermined trace.

7. A method as claimed in claim 6, further including the steps of:
in one operation of the recorder-player, making the first direction an erasure direction such that erasure follows reading by scanning of the storage member (25) with a single laser beam (31); and
in another operation of the recorder-player, reducing the laser beam intensity such that the heating of the storage member (25) keeps the temperature of the recording layer below the Curie temperature such that the recorded information is read but not changed.

8. A method as claimed in claim 6, further including the steps of:
in one operation of the recorder-player, making the first direction an erasure direction;
selectively alternating the magnetic polarity of a magnetic bias field which floods the portion (11) of the storage member (25) irradiated by the laser beam (31) such that readout occurs before alteration of the residual magnetization; and
alternating the bias field for recording information onto the storage member (25).

## Patentansprüche

1. Ein magnetooptisches Aufzeichnungs/Wiedergabegerät, das zum Lesen, Löschen und Aufzeichnen von Informationen auf bzw. von einem magnetooptischen Speicherglied (25) ausgelegt ist und das enthält:
ein Lasermittel (30) zum Aussenden eines einzigen Laserstrahls (31) auf das Speichermittel, um einen Teil (11) des Speichermittels (25) zu bestrahlen;
Steuermittel für die relative Bewegung des Speichermittels (25) und des Laserstrahls (31), so daß der Laserstrahl eine vorgegebene Spur auf dem Speichermittel abtastet;
Ablesemittel (82, 57, 60, 62, 65), die in einem Lesemodus betrieben werden können, so daß sie einen vom Speicherglied (25) reflektierten Strahl abfangen und demodulieren können, um eine Anzeige der im Speicherglied abgespeicherten Informationen zu erhalten;
Aktivierungsmittel zum Aktivieren des Lasermittels, um eine Strahlstärke einzustellen, die ausreicht, um den bestrahlten Teil (11) örtlich auf eine Temperatur über dem Curie-Punkt aufzuheizen, um das Löschen im bzw. Aufzeichnen auf das Speichermittel (25) zu bewirken;
ein Vormagnetisierungsmittel (26, 71) zum Ausrichten der Restmagnetisierung im bestrahlten Teil beim Abkühlen unter die Curie-Temperatur in eine erste von zwei möglichen Restrichtungen;
wobei das Aufzeichnungs/Wiedergabegerät dadurch gekennzeichnet ist, daß:
die Steuermittel und Aktivierungsmittel (83, 86) zur Beibehaltung der Laserintensität und der relativen Geschwindigkeit der Speicherglieder (25) und des Laserstrahls (31) ausgelegt sind, so daß ein vorbestimmter Eintrittsteil (13) des bestrahlten Teils (11) unter der Curie-Temperatur liegt, so daß der von diesem Teil reflektierte Strahl moduliert wird, um die anfängliche Restmagnetisierung dieses Teils anzuzeigen; und
das Ablesemittel (82, 57, 60, 62, 65) eingesetzt wird, um den vom Eintrittsteil reflektierten Strahl zu demodulieren, um beim Abtasten des Speicherglieds (25) durch den Strahl die Restmagnetisierung des Eintrittsteils (13) zu erfassen, und so die vorher in der bestimmten Spur abgespeicherten Information anzuzeigen.

2. Ein Aufzeichnungs/Wiedergabegerät gemäß Anspruch 1, in dem die erste Richtung als Löschrichtung der Restmagnetisierung, und die zweite Richtung als informationstragende Richtung der Restmagnetisierung bezeichnet wird, so daß die vorherige Information gelesen wird bevor der bestrahlte Teil (11) in Löschrichtung gelöscht wird.

3. Ein Aufzeichnungs/Wiedergabegerät gemäß Anspruch 1, in dem die erste Richtung als Restmagnetisierungsrichtung zum Tragen von Informationen, und die zweite Richtung der Restmagnetisierung als Löschrichtung bezeichnet wird, so saß die vorherige Information gelesen wird bevor der bestrahlte Teil (11) wieder beschrieben wird.

4. Ein Aufzeichnungs/Wiedergabegerät gemäß Anspruch 3, in dem die Vormagnetisierung selektiv umgekehrt wird zur Aufzeichnung von Informationen auf der vorbestimmten Spur, die mit Löschbereichen durchsetzt ist, während die vorherige Information während des Aufzeichnens gelesen wird.

5. Ein Aufzeichnungs/Wiedergabegerät gemäß einem der obigen Ansprüche, in dem das Aktivierungsmittel das Lasermittel aktiviert zum Abstrahlen eines Laserstrahls mit einer Stärke von weniger als erforderlich, um den bestrahlten Teil des Speicherglieds auf die Curie-Temperatur aufzuheizen, und das an das Ablesemittel (82, 57, 60, 62, 65) angeschlossen ist zum Aktivieren des Ablesemittels, das von der Speichervorrichtung reflektierte Licht zu erfassen zum Ablesen der vorher aufgezeichneten Information ohne Veränderung dieser vorher aufgezeichneten Information.

6. Ein Verfahren zum Betrieb eines magnetooptischen Aufzeichnungs/Wiedergabegeräts, das zum Lesen, Löschen und Aufnehmen von Informationen auf bzw. von einem magnetooptischen Speicherglied (25) ausgelegt ist, wobei das Verfahren die folgenden Schritte umfaßt:
Anwenden eines Lasermittels (30) zum Aussenden eines einzigen Laserstrahls (31) zum Speichermittel, um einen Teil (11) des Speichermittels (25) zu bestrahlen;
relative Bewegung des Speichermittels (25) und des Laserstrahls (31), so daß der Laserstrahl eine vorgegebene Spur auf dem Speichermittel abtastet;
Betrieb eines Ablesemittels (82, 57, 60, 62, 65), in einem Lesemodus, so daß es einen vom Speicherglied (25) reflektierten Strahl abfangen und demodulieren kann, um eine Anzeige der auf dem Speicherglied abgespeicherten Informationen zu erhalten;
Aktivieren des Lasermittels, um eine Strahlstärke einzustellen, die ausreicht, um den bestrahlten Teil (11) örtlich auf eine Temperatur über dem Curie-Punkt aufzuheizen, um das Löschen vom bzw. Aufzeichnen auf das Speichermittel (25) zu bewirken;
Einsatz eines Vormagnetisierungsmittels (26, 71) zum Ausrichten der Restmagnetisierung im bestrahlten Teil in eine erste von zwei möglichen Restrichtungen beim Abkühlen unter die Curie-Temperatur;
wobei das Verfahren gekennzeichnet ist durch:
Steuerung der Stärke des Strahls aus dem Lasermittel (30) und der relativen Geschwindigkeit der Speicherglieder (25) gegenüber dem Laserstrahl (31), so daß ein vorbestimmter Eintrittsteil (13) des bestrahlten Teils (11) unter der Curie-Temperatur liegt, so daß der von diesem Teil reflektierte Strahl moduliert wird, um die anfängliche Restmagnetisierung dieses Teils anzuzeigen; und
Einsatz des Ablesemittels (82, 57, 60, 62, 65) zum Demodulieren des vom Eintrittsteil reflektierten Strahls, um beim Abtasten des Speicherglieds (25) durch den Strahl die Restmagnetisierung des Eintrittsteils (13) zu erfassen, und so eine Anzeige der vorher in der vorbestimmten Spur abgespeicherten Information zu geben.

7. Ein Verfahren gemäß Anspruch 6, das ferner die folgenden Schritte umfaßt:
in einer Operation des Aufzeichnungs/Wiedergabegeräts Bestimmen der ersten Richtung als Löschrichtung, so daß das Löschen dem Ablesen durch Abtasten des Speicherglieds (25) mit einem einzigen Laserstrahl (31) nachfolgt; und
in einer anderen Operation des Aufzeichnungs/Wiedergabegeräts Verringerung der Stärke des Laserstrahls, so daß beim Erhitzen des Speicherglieds (25) die Temperatur der Aufzeichnungsschicht unter der Curie-Temperatur bleibt, so daß die aufgezeichneten Informationen gelesen aber nicht verändert werden.

8. Ein Verfahren gemäß Anspruch 6, das ferner die folgenden Schritte umfaßt:
In einer Operation des Aufzeichnungs/Wiedergabegeräts Bestimmen der ersten Richtung als Löschrichtung;
wahlweises Abwechseln der magnetischen Polarität eines Vormagnetisierungsfeldes, das den vom Laserstrahl (31) bestrahlten Teil (11) des Speicherglieds (25) flutet, so daß das Ablesen vor der Veränderung der Restmagnetisierung erfolgt; und
Abwechseln des Vormagnetisierungsfeldes zum Aufzeichnen von Informationen auf das Speicherglied (25).

## Revendications

1. Appareil enregistreur/lecteur magnéto-optique adapté pour lire, effacer et enregistrer des informations vers et à partir d'un élément d'emmagasinage magnéto-optique (25) et comprenant:
un moyen laser (30) pour émettre un seul faisceau laser (31) vers l'élément d'emmagasinage pour irradier une portion (11) de l'élément d'emmagasinage (25),
des moyens de commande pour déplacer l'élément d'emmagasinage (25) et le faisceau laser (31) l'un par rapport à l'autre de telle sorte que le faisceau laser balaie une piste prédéterminée sur l'élément d'emmagasinage,
des moyens de lecture (82, 57, 60, 62, 65) fonctionnant en mode lecture pour intercepter et démoduler un faisceau réfléchi à partir de l'élément d'emmagasinage (25) pour obtenir une indication des informations emmagasinées sur l'élément d'emmagasinage,
des moyens d'activation pour activer le moyen laser et fournir une intensité de faisceau suffisante pour chauffer localement la portion irradiée (11) à une température au dessus du point de Curie de façon à faciliter l'effaçage ou l'enregistrement sur l'élément d'emmagasinage (25),
un moyen de polarisation (26, 71) pour orienter la magnétisation résiduelle dans la portion irradiée vers une première de deux directions résiduelles possibles lors du refroidissement au dessous de la température de Curie,
l'appareil enregistreur/lecteur magnéto-optique étant caractérisé en ce que:
les moyens de commande et les moyens d'activation (83, 86) sont adaptés pour maintenir l'intensité laser et la vitesse relative de l'élément d'emmagasinage (25) et du faisceau laser (31) de telle sorte qu'une portion avant prédéterminée (13) de la portion irradiée (11) est en dessous de la température de Curie de telle manière que le faisceau réfléchi à partir de cette portion est modulé pour indiquer la magnétisation résiduelle initiale de cette portion,
les moyens de lecture (82, 57, 60, 62, 65) étant utilisés pour démoduler le faisceau réfléchi à partir de la portion avant de façon à détecter la magnétisation résiduelle de la portion avant (13) lorsque le faisceau balaie l'élément d'emmagasinage (25), donnant ainsi une indication des informations précédentes emmagasinées dans la piste prédéterminée.

2. Appareil enregistreur/lecteur magnéto-optique selon la revendication 1, dans lequel ladite première direction est désignée en tant que direction d'effacement de magnétisation résiduelle et la seconde direction en tant que direction portant les informations de magnétisation résiduelle, de telle sorte que les informations précédentes sont lues avant que la portion irradiée (11) soit effacée dans la direction d'effacement.

3. Appareil enregistreur/lecteur magnéto-optique selon la revendication 1, dans lequel ladite première direction est désignée en tant que direction de la magnétisation résiduelle pour porter les informations et ladite seconde direction de magnétisation résiduelle en tant que direction d'effacement, de telle sorte que les informations précédentes sont lues avant de ré-écrire la portion irradiée (11).

4. Appareil enregistreur/lecteur magnéto-optique selon la revendication 3, dans lequel la polarisation est inversée sélectivement pour enregistrer des informations sur la piste prédéterminée parsemée de portions d'effacement alors que les informations précédentes sont lues durant l'enregistrement.

5. Appareil enregistreur/lecteur magnéto-optique tel que revendiqué dans une des revendications précédentes, dans lequel lesdits moyens d'activation activent le moyen laser pour émettre un faisceau laser ayant une intensité inférieure à celle requise pour chauffer la portion irradiée de l'élément d'emmagasinage à la température de Curie et sont connectés aux moyens de lecture (82, 57, 60, 62, 65) pour activer les moyens de lecture de façon à détecter la lumière réfléchie à partir de l'élément d'emmagasinage et lire les informations précédemment enregistrées sans les altérer.

6. Méthode de mise en oeuvre d'un appareil enregistreur/lecteur magnéto-optique pour lire, effacer et enregistrer des informations à partir et sur un élément d'emmagasinage magnéto-optique (25), la méthode comprenant les étapes de :
utiliser un moyen laser (30) pour émettre un seul faisceau laser (31) vers l'élément d'emmagasinage et irradier une portion (11) de l'élément d'emmagasinage (25),
déplacer l'élément d'emmagasinage (25) et le faisceau laser (31) l'un par rapport à l'autre de telle sorte que le faisceau laser balaie une piste prédéterminée sur l'élément d'emmagasinage,
mettre en oeuvre un moyen de lecture (82, 57, 60, 62, 65) dans un mode de lecture pour intercepter et démoduler un faisceau réfléchi à partir de l'élément d'emmagasinage (25) pour obtenir une indication des informations emmagasinées sur l'élément d'emmagasinage,
activer le moyen laser pour fournir une intensité de faisceau suffisante pour chauffer localement la portion irradiée (11) à une température supérieure au point de Curie de façon à faciliter l'effacement ou l'enregistrement sur l'élément d'emmagasinage (25),
utiliser un moyen de polarisation (26, 71) pour orienter la magnétisation résiduelle dans la portion irradiée selon une première de deux directions résiduelles possibles lors du refroidissement au dessous de la température de Curie,
la méthode étant caractérisée par les étapes de :
commander l'intensité du faisceau à partir du moyen laser (30) et la vitesse relative de l'élément d'emmagasinage (25) par rapport au faisceau laser (31) de telle sorte qu'une portion avant prédéterminée (13) de la portion irradiée (11) soit inférieure à la température de Curie de façon à ce que le faisceau réfléchi à partir de cette portion soit modulé pour indiquer la magnétisation résiduelle de cette portion et,
utiliser le moyen de lecture (82, 57, 60, 62, 65) pour démoduler le faisceau réfléchi à partir de la portion avant de façon à détecter la magnétisation résiduelle de la portion avant (13) au fur et à mesure que le faisceau balaie l'élément d'emmagasinage (25) donnant ainsi une indication des informations précédentes emmagasinées dans la piste prédéterminée.

7. Méthode telle que revendiquée dans la revendication 6, comprenant en outre les étapes de :
dans une opération de l'appareil enregistreur/lecteur, prendre la première direction comme direction d'effacement de telle sorte que l'effacement suit la lecture en balayant l'élément d'emmagasinage (25) avec un seul faisceau laser (31), et
dans une autre opération de l'appareil enregistreur/lecteur, réduire l'intensité du faisceau laser de telle sorte que le chauffage de l'élément d'emmagasinage (25) conserve la température de la couche d'enregistrement au dessous de la température de Curie de façon à ce que les informations enregistrées soient lues mais pas modifiées.

8. Méthode telle que revendiquée dans la revendication 6, comprenant en outre les étapes de :
dans une opération de l'appareil enregistreur/lecteur, prendre la première direction comme direction d'effacement,
alterner sélectivement la polarité magnétique d'un champ de polarisation magnétique qui magnétise la portion (11) de l'élément d'emmagasinage (25) irradié par le faisceau laser (31) de sorte que la lecture a lieu avant la modification de la magnétisation résiduelle, et
alterner le champ de polarisation pour enregistrer des informations sur l'élément d'emmagasinage.
